# EUROPÄISCHE PATENTSCHRIFT

(11) **EP 1 006 848 B1**
(45) Veröffentlichungstag und Bekanntmachung des Hinweises auf die Patenterteilung: **25.09.2002**
(21) Anmeldenummer: 99926377.5
(22) Anmeldetag: 24.05.1999
(51) Int. Cl.: A47J 31/00, A47J 31/06, A47J 31/04

(54) **VERFAHREN UND VORRICHTUNG ZUR ZUBEREITUNG VON KAFFEE**
METHOD AND DEVICE FOR PREPARING COFFEE
PROCEDE ET DISPOSITIF POUR PREPARER DU CAFE

(30) Priorität: 27.05.1998 DE 19823546
(43) Veröffentlichungstag der Anmeldung: 14.06.2000
(73) Patentinhaber: Strauss, Rolf-Peter, 35066 Frankenberg (DE)
(72) Erfinder: Strauss, Rolf-Peter, 35066 Frankenberg (DE)
(74) Vertreter: Kudlek, Franz Thomas
(86) Internationale Anmeldenummer: EP9903548
(87) Internationale Veröffentlichungsnummer: WO99060900

(56) Entgegenhaltungen:
- WO-A-95/11613
- DE-A- 3 935 384
- GB-A- 956 109
- US-A- 2 862 440
- US-A- 4 858 523
- US-A- 5 063 838
- US-A- 5 165 327

## Beschreibung

Die Erfindung betrifft ein eine Vorrichtung und ein Verfahren zur Zubereitung von Kaffee in einer Kaffeemaschine, die insbesondere im privaten Bereich Anwendung findet.

Derartige Geräte sind als Kaffee- oder Espressomaschinen bekannt. Bei einer Kaffeemaschine wird kaltes Wasser meist im Durchlaufverfahren erhitzt, wobei es durch Dampfblasenbildung nach oben steigt und anschließend durch einen Filter in eine Kaffeekanne läuft. Auch sind Kaffeemaschinen bekannt, bei denen erst das gesamte Wasser bei leichtem Überdruck zum Sieden gebracht wird, bevor es durch den Überdruck in den höher liegenden Filter strömt. Kaffeemaschinen zeichnen sich durch eine einfache Zubereitung größerer Mengen Kaffees aus. Der fertige Kaffee bleibt bis zum Gebrauch auf der Heizplatte der Kaffeemaschine oder wird in eine Thermoskanne umgefüllt. Bei Espressomaschinen wird üblicherweise siedendes Wasser mit Druck durch einen Kaffeefilter gepresst. Ihr wesentlicher Vorteil ist die frische Zubereitung des Kaffees.

Die bekannten Kaffeemaschinen haben dadurch, daß eine Kaffeemenge entsprechend dem erwarteten Bedarf zubereitet wird, den Nachteil, daß der Kaffee bis zum späteren Gebrauch kälter und bitterer wird. Weiterhin wird man dazu verleitet, mehr Kaffee zuzubereiten, als tatsächlich getrunken wird, so daß häufig ein Rest übrigbleibt. Espressomaschinen weisen dagegen den Nachteil auf, daß die Zubereitung mit einem größeren Aufwand verbunden ist, da meist maximal zwei Tassen gleichzeitig zubereitet werden können. Dadurch ist die Zubereitung von mehreren Tassen Espresso aufwendig. Auch läßt sich Espresso nicht länger vor dem Gebrauch vorbereiten.

Die US-A-2 862 440 offenbart eine Kaffeemaschine gemäß dem Oberbegriff des Anspruchs 1 und ein Verfahren zur Zubereitung von Kaffee in einer Kaffeemaschine, wobei die Kaffeemaschine vor der Inbetriebnahme mit Wasser und Kaffeepulver gefüllt, das Wasser erhitzt und anschließend durch das Kaffeepulver geleitet wird, wobei das Kaffeepulver beim Einfüllen auf mehrere Kammern eines Kaffeefilters verteilt wird, und zur Fertigstellung der gewünschten Menge Kaffees die Kammern sukzessive mit erhitztem Wasser oder Wasserdampf beaufschlagt werden. Dieses Dokument offenbart ferner eine Kaffeemaschine zur Zubereitung von mehreren Tassen Kaffee, bestehend aus einem Wasserbehälter, einer Vorrichtung zur Zufuhr von Energie und einem Kaffeefilter zur Aufnahme von Kaffeepulver, wobei der Kaffeefilter mehrere, insbesondere einzeln mit heißem Wasser oder Wasserdampf beaufschlagbare Kammern aufweist.

Aus der US-A-5 165 327 ist eine Wärmeisolierung für bereits zubereiteten Kaffee in einer Kaffeemaschine bekannt.

Der vorliegenden Erfindung liegt die Aufgabe zugrunde, ein Verfahren und eine Vorrichtung zur Vorbereitung einer größeren Menge Kaffees zu schaffen, das bzw. die sich durch eine bequeme, tassenweise Zubereitung von frisch aufgebrühtem Kaffee am Tisch auszeichnet.

Die Aufgabe wird erfindungsgemäß durch die Vorrichtung gemäß Anspruch 1 und durch das Verfahren gemäß Anspruch 9 gelöst.

Durch dieses Verfahren und diese Vorrichtung ergibt sich der Vorteil, daß einerseits die Kaffeemaschine, ähnlich wie eine herkömmliche Kaffeemaschine, bequem gleichzeitig für mehrere Tassen Kaffee vorbereitet werden kann und andererseits die Zubereitung, ähnlich wie bei einer Espressomaschine, tassenweise bei Bedarf erfolgt. Dabei kann zwischen Zu- und Vorbereitung eine größere Zeitspanne liegen, ohne daß sich die Qualität des Kaffees nennenswert verschlechtert. Mit diesen Eigenschaften ähnelt die Kaffeemaschine den aus der Gastronomie bekannten Kaffeevollautomaten, wobei durch das vorgeschlagene Verfahren eine äußerst kompakte Bauart zu verwirklichen ist. Damit werden die Vorteile der bekannten Kaffee- und Espressomaschinen in einem handlichen Gerät vereint: die einfache Vorbereitung einer größeren Menge Kaffees, die anschließend bequem zur Verfügung steht und das frische Aufbrühen, wodurch das Aroma und der Duft des Kaffees am besten erhalten bleiben. Weiterhin ergibt sich der Vorteil der Vorbereitung von verschiedenen Kaffeearten: Stärke, Marke und Art des Kaffees können auf die Wünsche verschiedener Personen abgestimmt werden. Auch ist es möglich, nur heißes Wasser zur Zubereitung von Tee zu entnehmen. Ein weiterer Vorteil dieser Kaffeemaschine ist der sparsame Umgang mit Kaffee. Es wird nur genau nach Bedarf Kaffeemehl zur Zubereitung verwendet; übrig gebliebenes Kaffeemehl kann in der Maschine bis zur nächsten Benutzung verbleiben.

Die erfindungsgemäße Kaffeemaschine zeichnet sich durch das Merkmal eines beheizbaren Druckwasserbehälters mit einer hochwirksamen Wärmeisolierung aus: dadurch kann die Maschine einige Stunden unabhängig vom Stromnetz betrieben werden, da das einmal erhitzte Wasser nur sehr langsam kälter wird und der Druck, der das Wasser durch das Kaffeemehl treibt, lange erhalten bleibt. Durch die Unabhängigkeit von einer externen Energiezufuhr während des Aufbrühens kann diese Maschine ideal am Tisch oder beim Picknick, ähnlich wie eine herkömmliche Thermoskanne, benutzt werden. Damit kann bei Tisch eine Tasse ähnlich schnell und bequem mit Kaffee gefüllt werden wie mit einer Thermoskanne, in der sich schon aufgebrühter Kaffee befindet. Ein weiterer wichtiger Vorteil der guten Wärmedämmung ist der geringe Energiebedarf der Kaffeemaschine.

Im Folgenden sollen anhand der Figuren 1 bis 7 vorteilhafte Ausführungsformen der Erfindung näher erläutert werden. Es zeigen
- Figur 1: einen Schnitt einer bevorzugten Ausführungsform die Kaffeemaschine,
- Figur 2: eine Darstellung der Kaffeemaschine mit abgenommenem Deckel,
- Figur 3: eine Darstellung eines Segments des Kaffeefilters,
- Figur 4: eine Ausführung des Druckbehälters mit verschiedenen Energiespeichern,
- Figur 5: einen Druckbehälter, der extern beheizbar ist,
- Figur 6: einen einteiligen, segmentierten Kaffeefilter und
- Figur 7: eine bevorzugte Ausführung mit Wasserpumpe.

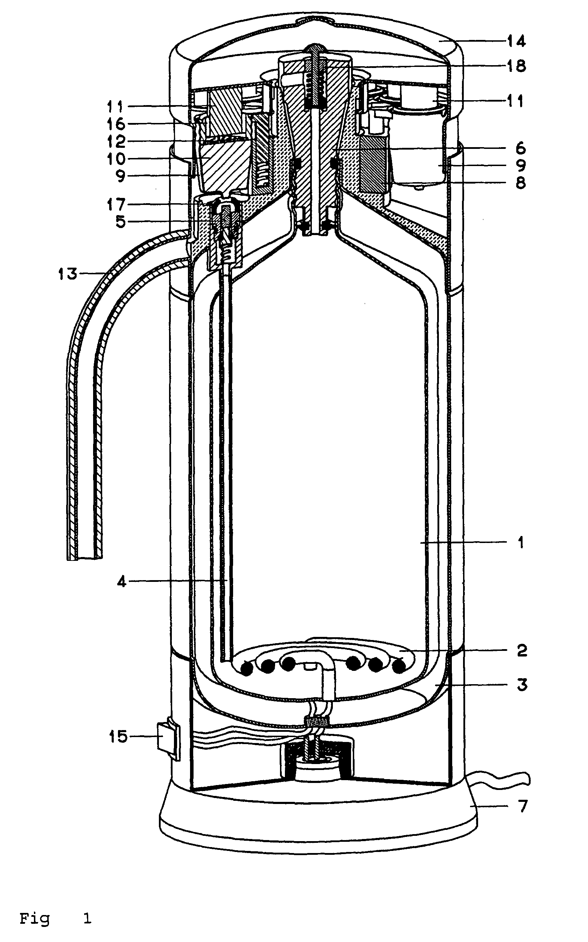

In Figur 1 ist der prinzipielle Aufbau der Kaffeemaschine dargestellt. Das Wasser für die Kaffeebereitung befindet sich im Druckbehälter 1, der von einer elektrischen Heizwendel 2 beheizt wird und der sich in einer Vakuumisolierung 3 befindet. Zum Druckbehälter gehört die Wassersteigleitung 4 und das Ventil 5. Der Druckbehälter wird durch den Deckel 6 verschlossen und steht lösbar auf einem Sockel 7, über den die Kaffeemaschine, ähnlich wie ein Wasserkocher, an das Stromnetz angeschlossen ist. Oberhalb der Vakuumisolierung befindet sich der drehbare Filterhalter 8, in den mehrere Filterkammern 9 eingehängt werden können. In den Kammern befindet sich Kaffeepulver 10 für jeweils eine Tasse Kaffee. Die Filterkammern 9 werden mit den schraubbaren Filterdeckel 11 verschlossen. Im Filterdeckel 11 befindet sich ein feinporiges Metallsieb 12, welches dazu dient, das Kaffeepulver zurückzuhalten. Durch den Ausguß 13 fließt der fertige Kaffee in die Kaffeetasse. Nach oben wird die Kaffeemaschine durch den Deckel 14 verschlossen, der auf den Filterdeckeln 11 aufliegt. Das Sicherheitsventil 18, welches in den Deckel 6 integriert ist, schützt den Druckbehälter vor Beschädigung, falls die Wärmezufuhr nicht automatisch unterbrochen wird. Außerdem kann mit Hilfe dieses Ventils ein Druckausgleich zwischen Wasserbehälter und Umgebung erfolgen.

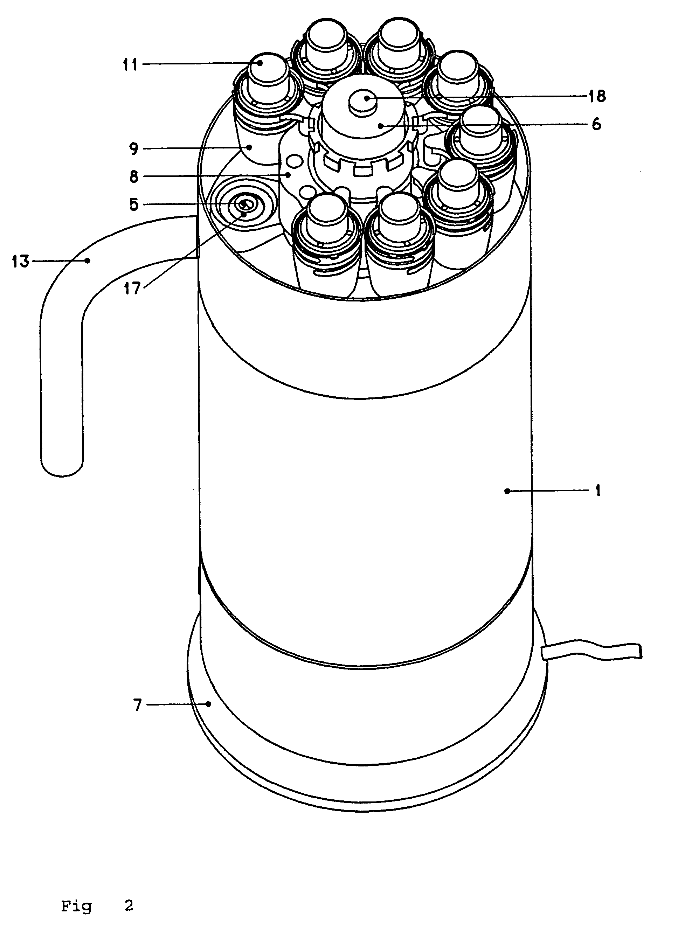

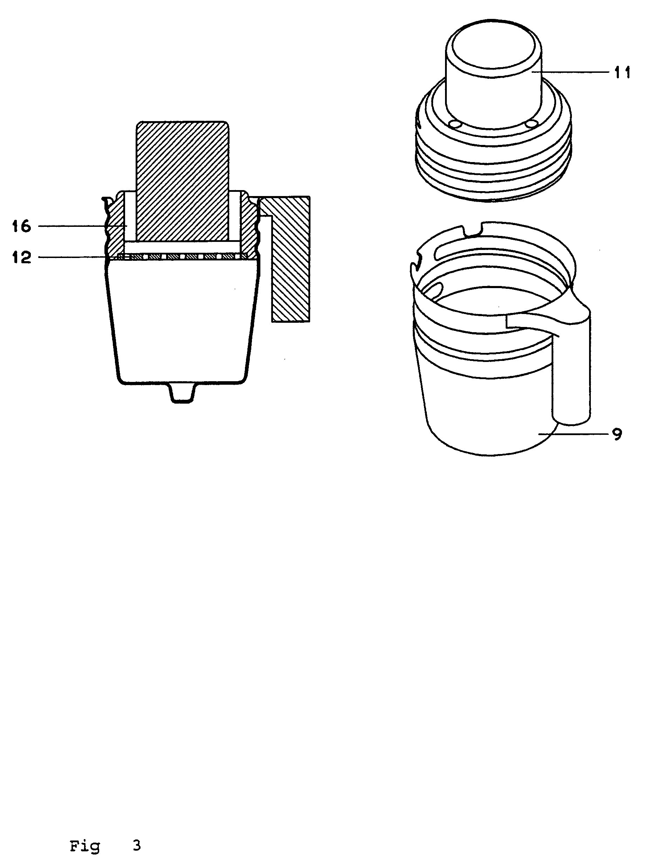

Zur Vorbereitung der Kaffeemaschine werden die Deckel 14 und 6 abgenommen, Wasser in den Druckbehälter 1 gefüllt und der Deckel 6 wieder verschlossen, siehe Figur 2. Die Filterdeckel 11 der Filterkammern 9 werden abgeschraubt und die Kammern mit Kaffeepulver befüllt. Zum einfacheren Befüllen bzw. Säubern können die Filterkammern 9, siehe Figur 3, aus dem Filterhalter 8 genommen werden. Es können dabei verschiedene Sorten Kaffee oder Espresso eingefüllt werden. Damit ist es möglich, verschiedenen Personen ihren bevorzugten Kaffee vorzubereiten. Die Filterdeckel 11 werden wieder zugeschraubt und der Deckel 14 aufgesteckt. Nach Betätigung des Schalters 15 wird die Kaffeemaschine beheizt. Dies ist sehr energiesparend, da durch die Vakuumisolierung praktisch keine Wärme entweicht. Der Heizstab schaltet sich automatisch, z.B. bei einem Druck von 3 bar, ab. Die Kaffeemaschine ist nun betriebsbereit.

Die Zubereitung einer Tasse frischen Kaffees erfolgt durch Drücken auf den Deckel 14. Dadurch werden die Filterkammern 9 nach unten gedrückt und diejenige Filterkammer, die sich über dem Ventil 5 befindet, öffnet dieses, indem sie es nach unten drückt. Die Dichtung 17 dichtet die Filterkammer gegen das Ventil 5 ab. Durch den Überdruck strömt Wasser durch die Steigleitung 4 und das Ventil 5 in die Filterkammer 9, wo dem Kaffeepulver 10 beim Durchströmen die Aromastoffe entzogen werden. Der Kaffee strömt durch das Sieb 12 und die Bohrungen 16, läuft über den Rand der Filterkammer und fließt dann durch den Ausguß 13 in die Tasse. Durch Loslassen des Deckels 14 wird der Vorgang abgebrochen. Wenn man den Deckel 14 und damit auch die Filterkammern weiterdreht, kann die nächste Tasse Kaffee bei Bedarf frisch aufgebrüht werden. Zuviel vorbereitetes Kaffeepulver kann später verwendet werden.

Kaffee kann, sofern sich Wasser und frisches Kaffeepulver in der Maschine befinden, solange aufgebrüht werden, solange im Druckbehälter 1 Überdruck herrscht. Dies ist bei Wassertemperaturen oberhalb von 100°C gewährleistet - um aber den Zapfvorgang zu verkürzen, sollte die Mindestbetriebstemperatur ca. 110°C betragen. Damit die Kaffeemaschine mehrere Stunden ohne externe Energieversorgung betrieben werden kann, muß sie die Energie, die durch Wärmeverluste entweicht, vor der Entnahme aus dem Sockel 7 speichern. Dies läßt sich, wie in Figur 1 dargestellt, am einfachsten durch ein weiteres Erhitzen des Wassers über die Mindestbetriebstemperatur realisieren, z.B. bei 130°C oder höher. Damit ist die Kaffeemaschine ohne Netzanschluß solange betriebsbereit, bis das Wasser bis auf die Mindesttemperatur abgekühlt ist. Eine weitere Energiespeicherm" glichkeit ist, daß der Druckbehälter größer dimensioniert wird und somit mit mehr Wasser befüllt werden kann, als zur Zubereitung des Kaffees notwendig ist.

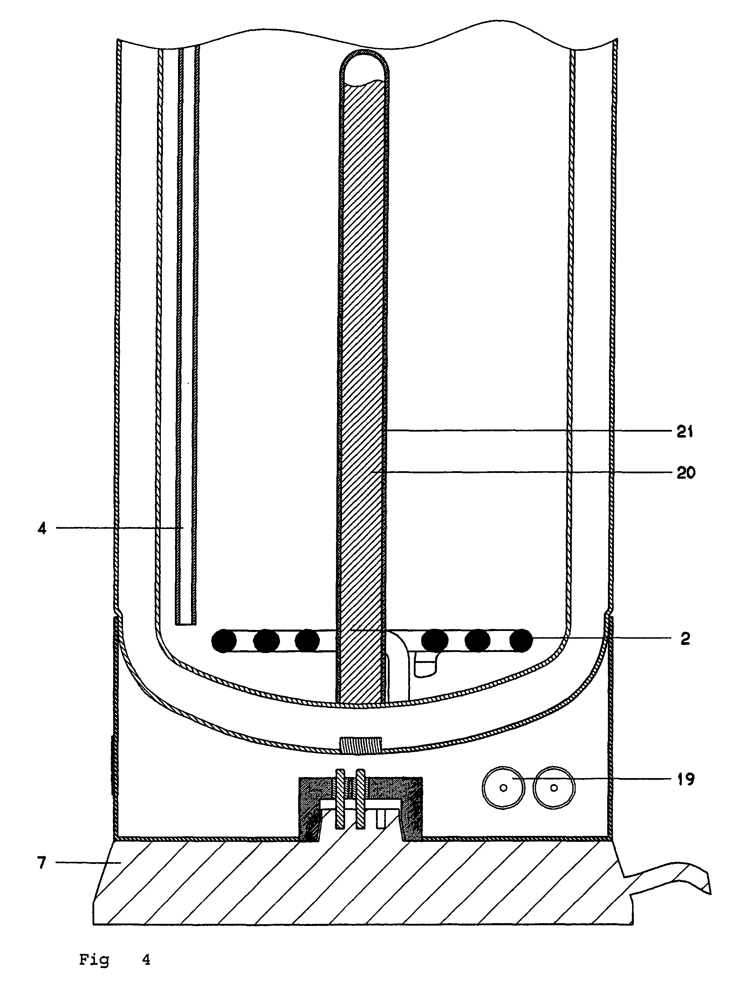

Wenn die Energiemenge, die sich durch Überhitzen des Wassers speichern läßt, nicht ausreicht, kann zusätzlich Energie durch Akkus 19 oder einen Latentspeicher 20 bereitgestellt werden, siehe Figur 4. Die Akkus geben ihre gespeicherte elektrische Energie über den Heizdraht 2 ab. Sie können geladen werden, wenn die Maschine auf dem Sockel 7 steht. Der Latentspeicher 20 besteht z.B. aus einem geschlossenen Rohr 21, in dem sich das Latentspeichermedium befindet. Dabei kommen alle Medien in Frage, die eine Phasenumwandlungstemperatur bevorzugt zwischen 110°C und 130°C haben, z.B. Polyethylen mit einer Umwandlungstemperatur von ca. 120°C. Der Latentspeicher gibt seine Energie über das Rohr 21 an das Wasser ab, wobei das Latentspeichermedium erstarrt. Geschmolzen wird das Medium beim Erhitzen des Wassers, sobald die Wassertemperatur die Schmelztemperatur erreicht hat.

Wichtigste Voraussetzung für die Energiespeicherung ist, daß der Druckbehälter, in dem sich heißes Wasser befindet, mit einer hochwirksamen Wärmedämmung, insbesondere einer Vakuumisolierung 3, umgeben ist. Erst dadurch ergeben sich so geringe Wärmeverluste, daß die zu speichernde Energie mit einem vertretbaren Aufwand an Kosten und Bauvolumen speicherbar wird.

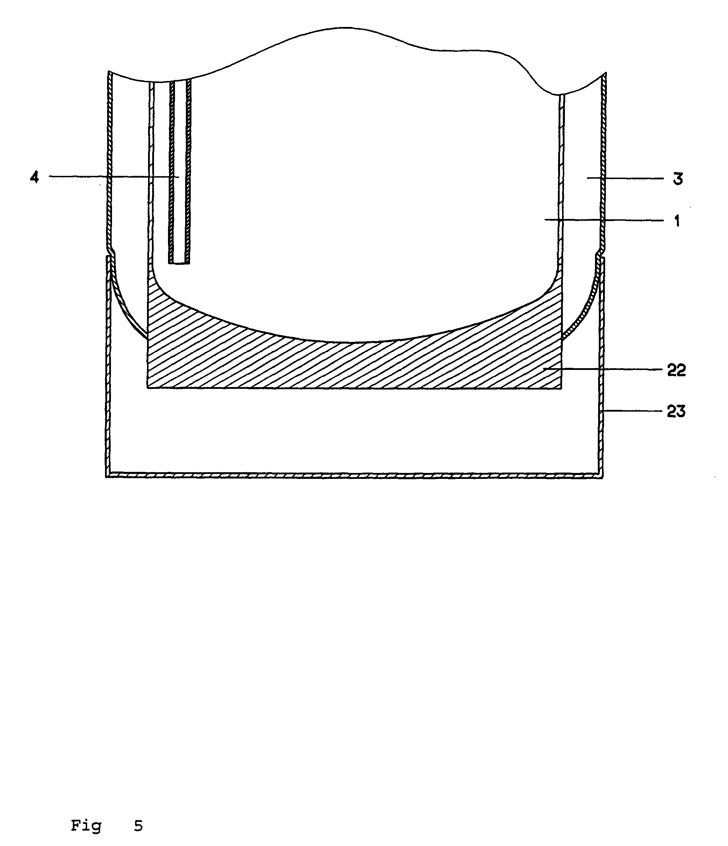

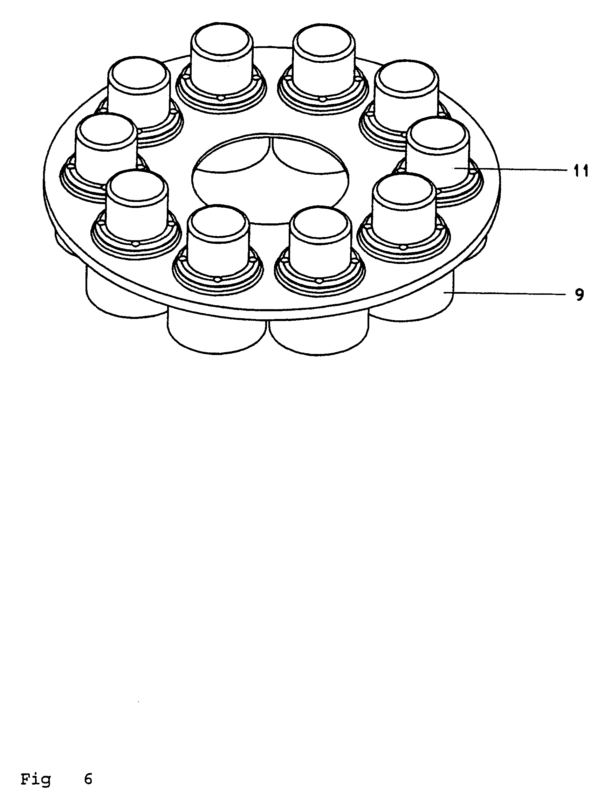

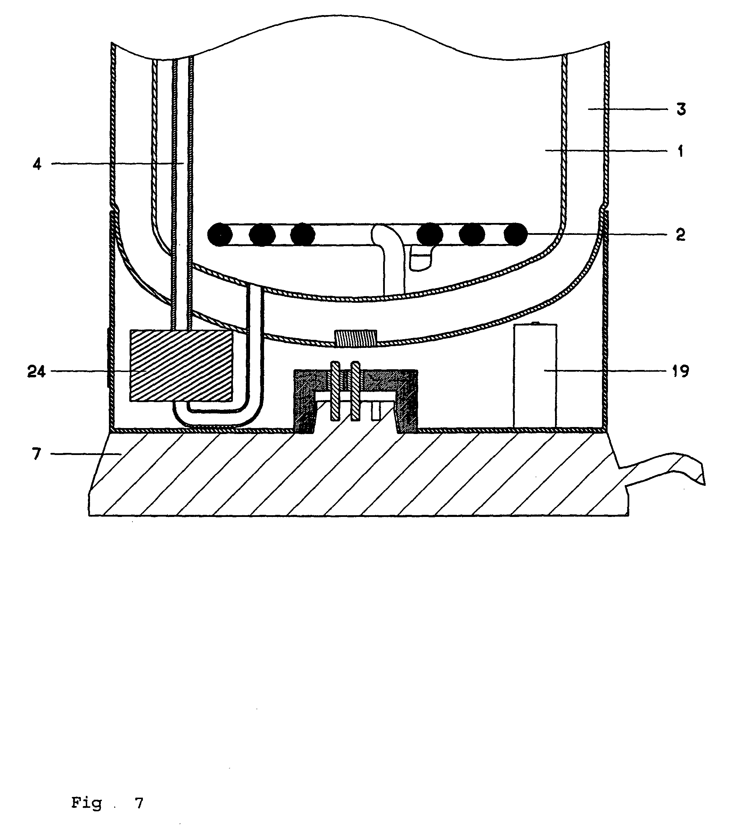

Abschließend sollen weitere vorteilhafte Ausführungsformen und Merkmale erläutert werden: Vorteilhaft ist, wie in Figur 1 dargestellt, die Ausführung des Ausgusses 13 als Griff, mit dem die Kaffeemaschine transportiert werden kann. Auch ist eine Ausführung des Deckels 14 aus durchsichtigem Material vorteilhaft, wodurch ein Blick auf die Kammern 9 möglich wird. Weiterhin muß der Kaffeefilter nicht zwingend drehbar sein, die gleiche Funktion wäre auch zu erzielen, wenn feststehende Kammern 9 mit einem drehbaren Ventil 5 kombiniert würden. In Figur 5 ist der untere Teil eines Wasserbehälters 1 dargestellt, der am Boden 22 eben ausgebildet ist und der direkt auf eine Heizplatte gestellt werden kann. Dazu ist es erforderlich, daß das Kaffeemaschinenunterteil 23 entfernt werden kann. Figur 6 zeigt einen einteiligen segmentierten Kaffeefilter, der alternativ zu einhängbaren Filterkammern verwendet werden könnte. In Figur 7 ist eine Kaffeemaschine dargestellt, die zur Erzeugung einer ausgeprägten Crema mit einer Wasserpumpe 24 ausgestattet ist, die einen höheren Wasserdruck, z.B. 12 bar, erzeugt. Der Wasserbehälter 1 ist bei dieser Ausführungsform drucklos ausgeführt und die Pumpe kann vorteilhaft mit einer Batterie 19 angetrieben werden. Bei dieser Ausführung kann beispielsweise auf ein Ventil, wie es oben beschrieben wurde, verzichtet werden.

## Patentansprüche

1. Kaffeemaschine zur Zubereitung von mehreren Tassen Kaffee, bestehend aus einem Wasserbehälter (1), einer Vorrichtung zur Zufuhr von Energie und einem Kaffeefilter zur Aufnahme von Kaffeepulver, wobei der Kaffeefilter mehrere, insbesondere einzeln mit heißem Wasser oder Wasserdampf beaufschlagbare Kammern (9) aufweist,
**dadurch gekennzeichnet,**
**daß** der beheizbare Wasserbehälter (1) mit einer hochwirksamen Wärmedämmung, insbesondere einer Vakuumisolierung (3) umgeben ist.

2. Kaffeemaschine zur Zubereitung von Kaffee nach Anspruch 1, **dadurch gekennzeichnet, daß** die einzelnen Kammern (9) des Kaffeefilters sternförmig um eine gemeinsame Mittelachse angeordnet sind.

3. Kaffeemaschine zur Zubereitung von Kaffee nach einem der Ansprüche 1 oder 2, **dadurch gekennzeichnet, daß** die verschiedenen Kammern (9) des Kaffeefilters einzeln aus der Kaffeemaschine entnommen werden können.

4. Kaffeemaschine zur Zubereitung von Kaffee nach einem der Ansprüche 1 bis 3, **dadurch gekennzeichnet, daß** der aus mehreren Kammern (9) bestehende Kaffeefilter drehbar ausgebildet ist.

5. Kaffeemaschine zur Zubereitung von Kaffee nach einem der vorstehenden Ansprüche, **dadurch gekennzeichnet, daß** das Wasser dadurch Energie speichert, daß es eine höhere Temperatur bzw. einen höheren Druck hat, als zum Betrieb der Kaffeemaschine vorgesehen bzw. notwendig ist.

6. Kaffeemaschine zur Zubereitung von Kaffee nach einem der vorstehenden Ansprüche, **dadurch gekennzeichnet, daß** der Wasserbehälter (1) mehr Wasser aufnehmen kann, als zum Zubereiten des Kaffees notwendig ist.

7. Kaffeemaschine zur Zubereitung von Kaffee nach einem der vorstehenden Ansprüche, **dadurch gekennzeichnet, daß** innerhalb des wärmegedämmten Wasserbehälters (1) ein Latentspeicher (20) angeordnet ist.

8. Kaffeemaschine zur Zubereitung von Kaffee nach einem der vorstehenden Ansprüche, **dadurch gekennzeichnet, daß** die Kaffeemaschine lösbar auf einem Sockel (7) angeordnet ist, durch den die Anbindung an ein Stromnetz sichergestellt ist.

9. Verfahren zur Zubereitung von Kaffee in einer Kaffeemaschine gemäß einem der vorstehenden Ansprüche, wobei die Kaffeemaschine vor der Inbetriebnahme mit Wasser und Kaffeepulver befüllt, das Wasser erhitzt und anschließend durch das Kaffeepulver geleitet wird,
**dadurch gekennzeichnet,**
**daß** das Kaffeepulver (10) beim Einfüllen auf mehrere Kammern (9) eines Kaffeefilters verteilt wird
und **daß** zur Fertigstellung der gewünschten Menge Kaffees die Kammern (9) sukzessive mit erhitztem Wasser oder Wasserdampf beaufschlagt werden.

## Claims

1. Coffee machine for preparing a number of cups of coffee, comprising a water container (1), a device for providing energy and a coffee filter for receiving coffee powder, wherein the coffee filter comprises a number of chambers (9), which, especially individually, are chargeable with water or steam,
**characterized in that** the heatable water container (1) is surrounded by a highly efficient heat insulation, especially a vacuum insulation (3).

2. Coffee machine for preparing coffee according to claim 1, **characterized in that** the individual chambers (9) of the coffee filter are arranged star-shaped about a common central axis.

3. Coffee machine for preparation of coffee according to claim 1 or 2, **characterized in that** the various chambers (9) of the coffee filter can be removed individually from the coffee machine.

4. Coffee machine for preparation of coffee according to claims 1 to 3, **characterized in that** the coffee filter comprising a number of chambers (9) is rotatable.

5. Coffee machine for preparation of coffee according to any one of the preceding claims, **characterized in that** the water stores energy **in that** it has a higher temperature or a higher pressure as would be necessary or is recommended for use of the coffee machine.

6. Coffee machine for preparation of coffee according to any one of the preceding claims, **characterized in that** the water container (1) can hold more water than is necessary for the preparation of the coffee.

7. Coffee machine for preparation of coffee according to any one of the preceding claims, **characterized in that** within the heat insulated water container (1) a latent heat storage device or PCM device (20) is provided.

8. Coffee machine for preparing coffee according to any one of the preceding claims, **characterized in that** the coffee machine is removably provided on a stand (7), by means of which the connection to the mains is provided.

9. Method for preparation of coffee in a coffee machine according to any one of the preceding claims, wherein the coffee machine is filled with water and coffee prior to its use, the water is heated and guided through the coffee powder,
**characterized in that**
the coffee powder (10) is distributed onto a number of chambers (9) of a coffee filter during the filling procedure, and that for providing the desired amount of coffee the chambers (9) are successively charged with heated water or steam.

## Revendications

1. Cafetière électrique pour la préparation de plusieurs tasses de café, comprenant un récipient pour l'eau (1), un mécanisme pour l'apport d'énergie et un filtre à café enrobant la poudre de café, ce filtre étant divisé en plusieurs compartiments individuels permettant le passage d'eau ou de vapeur, **caractérisée en ce que** le récipient d'eau (1) chauffable est entouré d'une couche isolatoire très performante, en particulier d'une isolation sous vide (3).

2. Cafetière électrique pour la préparation de café d'après la revendication 1, **caractérisée en ce que** les compartiments individuels du filtre à café (9) sont groupés en forme d'étoile autour de l'axe centrale.

3. Cafetière électrique pour la préparation de café d'après les revendications 1 ou 2, **caractérisée en ce que** les filtres individuels peuvent être sortis individuellement de la cafetière.

4. Cafetière électrique pour la préparation de café d'après les revendications 1 à 3, **caractérisée en ce que** la construction du filtre à café se composant de plusieurs compartiments (9) est rotative.

5. Cafetière électrique pour la préparation de café d'après les revendications précédentes, **caractérisée en ce que** l'eau conserve une réserve d'énergie supérieure (eau ou vapeur) à l'énergie nécessaire pour le fonctionnement de la cafetière.

6. Cafetière électrique pour la préparation de café d'après les revendications précédentes, **caractérisée en ce que** le récipient d'eau (1) peut contenir une quantité d'eau supérieure à celle nécessaire au fonctionnement de la cafetière.

7. Cafetière électrique pour la préparation de café d'après les revendications précédentes **caractérisée en ce que** à l'intérieur du réservoir d'eau isolé (1) se trouve un régulateur thermique à changement d'état.

8. Cafetière électrique pour la préparation de café d'après les revendications précédentes **caractérisée en ce que** la cafetière est positionnée d'une manière amovible sur un socle (7) lui-même relié au courant électrique.

9. Procédé pour la préparation de café d'après l'un des revendications précédentes qui permet a) de charger la cafetière, avant usage, d'eau et de poudre de café b) de chauffer l'eau qui traverse la poudre de café, **caractérisée en ce que** la poudre de café (10) est répartie dans plusieurs compartiments individuels (9) du filtre à café et que ces compartiments (9) sont traversés successivement par l'eau ou la vapeur.
